# EUROPEAN PATENT SPECIFICATION

(11) **EP 3 944 672 B1**
(45) Date of publication and mention of the grant of the patent: **25.12.2024**
(21) Application number: 20187704.0
(22) Date of filing: 24.07.2020
(51) Int. Cl.: H04W 48/10, H04W 48/16, H04W 48/18, H04W 48/12, H04W 48/20, H04W 84/12

(54) **METHOD AND DEVICES FOR OPTIMIZED USAGE OF HOTSPOTS**
VERFAHREN UND VORRICHTUNGEN ZUR OPTIMIERTEN NUTZUNG VON HOTSPOTS
PROCÉDÉ ET DISPOSITIFS POUR OPTIMISER L'UTILISATION DE POINTS D'ACCÈS

(43) Date of publication of application: 26.01.2022
(73) Proprietor: Deutsche Telekom AG, 53113 Bonn (DE)
(72) Inventor: Heidemann, Cornelius, 64372 Ober-Ramstadt (DE)
(74) Representative: Blumbach · Zinngrebe Patentanwälte PartG mbB

(56) References cited:
- US-A1- 2003 139 197
- US-A1- 2006 223 527
- US-A1- 2009 175 250
- US-A1- 2015 282 063
- US-A1- 2018 324 886

## Description

### Field of the invention

The invention generally relates to wireless communication systems, and especially to the utilization of WLAN access points, which are located at so-called hotspots, for accessing a communication network, such as the Internet, with a mobile communication device. In particular, the invention relates to a method and devices for optimized usage of WLAN access points.

### Background

A so-called hotspot is a physical location where a user of a mobile communication device may obtain Internet access via a wireless local-area network (WLAN) by accessing a WLAN device, typically a router, which is connected to an Internet service provider. Hotspots typically are public locations, for example in coffee shops or in hotels, which may be used to connect customer devices with the Internet.

Public hotspots are typically created from wireless access points configured to provide Internet access, controlled to some degree by the venue. In its simplest form, venues that have broadband Internet access can create public wireless access by configuring an access point (AP), in conjunction with a router to connect the AP to the Internet, wherein these functions may also be combined in a single wireless router. WLAN communication typically is based on one of the standards IEEE 802.11a, IEEE 802.11b, IEEE 802.11g, IEEE 802.11n, IEEE 802.11ac, or IEEE 802.11ax, also referred to as Wi-Fi.

Often several hotspots of different providers are present at the same location, and the user typically may also select the mobile radio network, i.e. the cellular network based for example on one of the standards GSM, UMTS or LTE, to be used for accessing the Internet. Users may access the wireless connection provided by the hotspot with their end devices, but typically get no information, what kind of service quality the hotspot provides. If cellular communications as well as several access points of different providers are available at a hotspot, it is not clear, whether it would be worth it to select the first access point of the hotspot, the second access point of the hotspot or the cellular communications as access point. If end devices automatically log into the access point of the hotspot, the user possibly gets a worse connection as before. From the user's point of view this is a problem.

From US 2018/324886 A1 a short-range wireless communication connection method and apparatus are known, by which a terminal can automatically provide information about other connectable external devices, after the terminal is connected to a specific external device by short-range wireless communication.

US 2006/223527 A1 describes methods, systems and codes for discovering service information, wherein an embodiment of the method comprises coding roaming service information to form a roaming information code, and wirelessly transmitting the roaming information code from a network access point to a mobile terminal of a user.

US 2015/282063 A1 describes techniques and protocols that enable a mobile device to scan a dedicated channel to obtain a neighbor report from an access point. From US 2003/139197 A1 a wireless network is known, said wireless network having mobile stations that determine to which access point they will associate based upon received beacon signal power levels and access point load information sent to the mobile station, thereby enhancing overall network performance by more efficient access point loading.

From US 2009/175250 A1 a method for mobile terminal access to a wireless local area network is known, wherein the method includes broadcasting service information relating to an access point in the wireless local area network, and associating the mobile terminal with the access point when the broadcasted service information matches a service profile stored in the mobile terminal.

From US 2011/0013569 A1 a method of automatically connecting a mobile communication device to a communication network using a network resource classification database is known, wherein a communication network access point is detected using the mobile communication device and network attributes associated with the access point are reported to a resource classification server. The server analyzes and stores the network attributes, determines auxiliary data related to the access point, and uses a rules database to determine a category identifier associated with the access point. The server creates a resource classification characterizing the access point based upon the network attributes, auxiliary data, and category identifier. The mobile communication device queries the server, receives a resource classification, and connects to an access point based upon the received resource classification.

### Summary

It is an object of the invention to show how a selection between several available options for accessing a pre-defined communciation network, in particular the Internet, with a mobile communication device can be performed in a better and/or simpler way, wherein the available options in particular comprise access via at least one WLAN access point and/or a cellular network.

The inventive solution is provided by the features of the independent claims. Accordingly, the object of the invention is achieved by a method according to claim 1, by a WLAN device according to claim 10 and a mobile communication device according to claim 13. Preferred and/or advantageous embodiments are provided in the dependent claims.

Generally, any aspect or advantage described in the following with respect to the subject matter of an independent claim also relates to the subject matter of any other independent claim. In particular, any aspect or advantage described in the following in the context of a method generally also applies in the context of a device or system and vice versa.

### Brief Description of the Figures

It is shown in
Fig. 1 a schematic view of a scenario, in which the inventive method may be performed, and in which a mobile communication device is located at a WLAN hotspot,
Fig. 2 a schematic view of an exemplary embodiment of an inventive WLAN device, and
Fig. 3 a schematic view of an exemplary embodiment of an inventive mobile communication device.

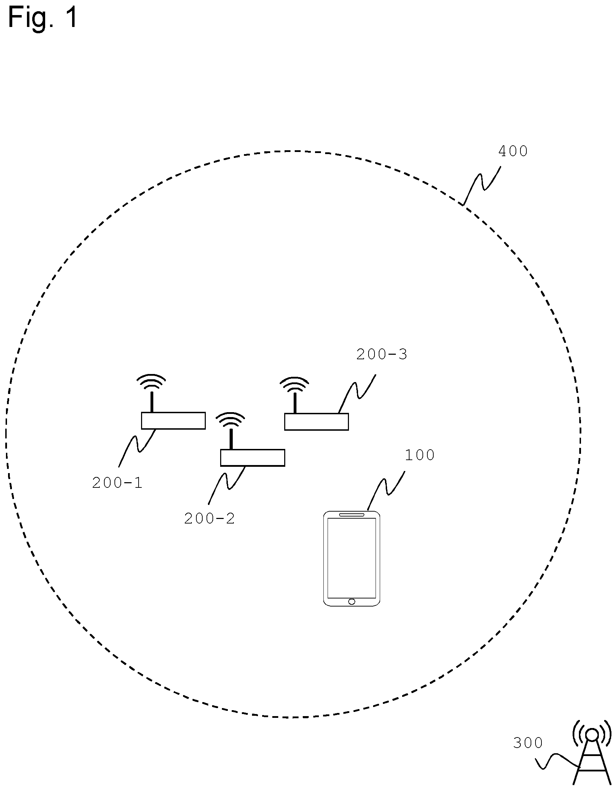

Fig. 1 in a schematic and simplified manner shows a scenario, in which a mobile communication device 100, which may for instance be a smartphone, is located at a WLAN hotspot 400. The WLAN hotspot location is depicted as the area 400, which shall represent the coverage of WLAN access points 200-1, 200-2 and 200-3. In the shown embodiment, the WLAN access points are provided as WLAN routers 200-1, 200-2 and 200-3, each of which provides WLAN access to a pre-defined communication network, in particular to the Internet, for a plurality of WLAN-capable end devices. In the shown embodiment, the mobile communication device 100 may access a cellular network via exemplary shown base station 300, so that the pre-defined network, which in particular is the Internet, may also be accessed by the mobile communication device 100 via the cellular network. However, also a mobile communication device may be used, which is not adapted for communication via a cellular network.

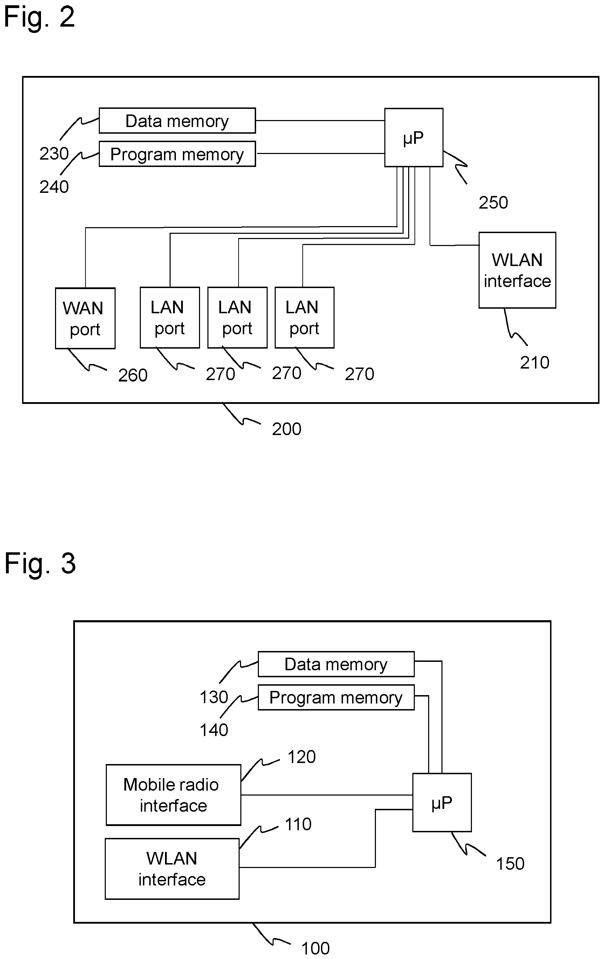

A schematic view of an exemplary design of a WLAN access point 200 provided as a WLAN router is shown in Fig. 2, wherein the WLAN access point 200 shown in Fig. 2 is exemplary for each of the WLAN access points 200-1, 200-2 and 200-3 shown in Fig. 1, and a schematic view of the design of the mobile communication device 100 is shown in Fig. 3.

The invention provides a method for providing information relating to network attributes associated with at least one of the WLAN access points 200-1, 200-2 and 200-3 to the mobile communication device 100, wherein the respective WLAN access point 200-1, 200-2 or 200-3 determines network attributes associated with the respective WLAN access point, and, depending on the determined network attributes, generates respective network attribute information and transmits the network attribute information to the mobile communication device 100 and possibly also to other mobile communication devices within the coverage area of the hotspot 400.

The network attributes, which may be determined by one of the WLAN access points 200-1, 200-2 or 200-3 comprise for example a maximum bit rate downstream and/or upstream, a currently available bit rate downstream and/or upstream, an average uptime, a volume limit, a login type, an information on whether VPN is allowed, a maximum number of currently allowable additional users, and/or an information on blocked ports. Uptime is a measure of reliability of the WLAN access point, given as a percentage of time, during which the respective WLAN access point has in the past been in operation and accessible. A volume limit may define a limit for an amount of data each mobile communication device, which accesses the respective WLAN access point, may download and/or upload during a pre-defined time duration, e.g. per day. The login type may define whether the WLAN access point is openly accessible or whether login credentials are needed for login.

In a first preferred embodiment, the step of determining the network attributes comprises retrieving, by the respective WLAN access point 200, static network attributes, which are stored in a memory 230 of the WLAN access point 200. Static network attributes may for instance be the maximum bit rate downstream and/or upstream, the volume limit, the login type, the information whether VPN is allowed and/or an information on blocked ports.

In a second preferred embodiment, the step of determining the network attributes comprises determining, by the respective WLAN access point 200, current values of dynamically changing network attributes associated with the WLAN access point 200. Dynamically changing network attributes may for instance be the currently available bit rate or throughput downstream and/or upstream, the average uptime and/or the maximum number of currently allowable additional users.

Generally, the network attributes are suitable to indicate the service quality of the respective WLAN access point 200. In addition to the above stated examples, also any other network attributes, which are suitable for this purpose, may be utilized.

It is important to note that the network attributes are locally determined by the respective WLAN access point 200, so that with respect to the dynamically changing network attributes a maximum currentness is achieved.

The steps of determining the network attributes, of generating the network attribute information and/or of transmitting the network attribute information preferably are repeated at pre-determined times, in particular cyclically in pre-defined time intervals, which also supports the currentness of the network attribute information.

For transmitting the network attribute information to the mobile communication device 100, the invention proposes two approaches.

In a first approach the network attribute information is transmitted to the end device, in the shown embodiment the mobile communication device 100, by means of an interpretable standardized name of the network identifier of the WLAN access point 200 located at the hotspot 400, wherein said network attribute information enables the end device 100 prior to establishing a connection to obtain the information whether a transition to the WLAN access point 200 at hotspot 400 is worthwhile. The network identifier, the so-called SSID (service set identifier), today consists of an arbitrary term, wherein often network identifiers are chosen, which are easy to read by a human. Alternatively network identifiers may designate a device type or provider name.

But today they are not used as identifiers, which comprise information with respect to usage possibilities regarding the data transmission procided by a WLAN access point. Contrary to that, the invention proposes to utilize an interpretable standardized name as a network identifier, wherein the information in the name is for example the maximum allowable bit rate or the like. For example, today the SSID of an access point at a hotspot is "ProviderA". According to the invention the network ID of a hotspot, i.e. the SSID of the respective access point, may for instance have the form of "DT-O-50-20-V-", wherein in this example "DT" identifies the provider, "O" indicates an open network, whereas "C" would indicate a closed network, "50" indicates the maximum download bit rate in Megabit/s , "20" indicates the maximum upload bit rate in Megabit/s, and "V" indicates that the network allows VPN (Virtual Private Network), whereas "N" might indicate that the network does not allow VPN. By means of a software the end device 100 may decide, whether it is worthwhile to use the WLAN access point 200 at the hotspot or to remain in the cellular network, which may for instance be based on LTE. So, in addition to a name the network ID may comprise a further sequence of character or letter combinations, which can be decoded by the software in the end device 100. By evaluating the network ID the software in the end device 100 then can decide whether the WLAN access point 200 at the hotspot 400 or a mobile radio network is chosen. Also a choice between at least two available WLAN access points 200 is enabled, wherein this is advantageous also for end devices, which are not adapted for communication via a cellular network, but via WLAN.

In the given example, in which the SSID has the form of "DT-O-50-20-V-" the end device 100 may decode the character sequence in such a way that the sequence is interpreted from left to right with five sub-sequences of characters being expected, respectively corresponding to the network attributes provider, login type, maximum download bitrate, maximum upload bitrate and information on VPN allowance, wherein the end of each subsequence is indicated by the delimiter symbol .

Hence, the network attribute information preferably is generated in the form of a service set identifier, which comprises information on the determined network attributes, and which is transmitted by broadcasting said service set identifier by the WLAN access point 200.

The network identifier, i.e. the SSID, of each of the WLAN access points 200-1, 200-2 and 200-3 preferably is renamed, when the respective WLAN access point is first put into operation, or when the connection of the WLAN access point is changed, in particular the broadband connection to an Internet service provider.

In the end device 100 a software is installed, which is adapted to interpret the network IDs of the WLAN access points and to decide thereupon whether the respective WLAN access point is used.

In a second approach, current dynamical information on network utilization of the WLAN access point 200 of the hotspot 400 are provided in such a way that the end device 100 or the user of the end device 100 can retrieve information on the current capacity utilization and usage of the WLAN access point 200 via a web page, which is accessible via the WLAN access point 200, wherein the web page is accessible via a defined URL (Uniform Resource Locator). The web page is machine-readable and preferably comprises, in addition or alternatively to the static information, dynamical information on current capacity utilization or the maximum number of users still allowed. Then, the end device 100 can interpret the web page and then, on the basis of the information, the end device 100 can decide to choose the WLAN access point 200 or during usage the end device 100 can decide to again leave the WLAN access point 200. For that purpose the web page is retrieved cyclically or on demand and the information is interpreted and a decision is made by comparison.

For the above purpose, in the WLAN access point 200 a webserver is installed. The webserver provides a URL with a web page, on which the current information on service quality may be accessed. On end devices, such as mobile communication device 100, a software is installed, which is adapted to interpret the contents of the web page and to decide on that basis, whether the hotspot is used, the hotspot is left, or, if appropriate, the hotspot is used again.

Accordingly, the method comprises generating a machine-readable web page, which comprises information on the determined network attributes, and transmitting said web page from a webserver, which is integrated in the WLAN access point 200, to the mobile communication device 100, wherein the mobile communication device 100 automatically interprets the received web page to extract network attribute information.

The above-described first approach is particularly advantageous for providing information on static network attributes, wherein the approach is simple and only requires renaming the network identifiers, i.e. the SSIDs, and adapting the mobile communication device 100 for enabling it to interpret the network identifier. However, it may also be conceivable to transmit dynamically changing network attributes by means of the network identifier.

The above-described second approach is particularly advantage for providing information on dynamically changing network attributes, wherein the inventive approach has the advantage of high currentness of the provided information on service quality of a WLAN access point. Such a high currentness, which results from the WLAN access point locally determining the network attributes, typically cannot be achieved by solutions known from the prior art, which for instance employ a central network resource classification database.

In a preferred embodiment of the method the mobile communication device 100 respectively receives a different piece of network attribute information from each of the WLAN access points 200-1, 200-2 and 200-3, located at the same hotspot 400 and the mobile communication device 100, depending on the received network attribute information associated with the WLAN access points 200-1, 200-2 and 200-3 automatically selects one of WLAN access points or a mobile radio network for accessing a destination network, in particular the Internet. The selection preferably is made based on a comparison of at least one pre-defined network attribute. For instance, a WLAN access point or the cellular network is selected depending on which of these provides the highest download bitrate or depending on which provides the highest reliability.

In Fig. 2 a schematic view of an exemplary embodiment of a WLAN access point 200 is shown, exemplary provided as a WLAN router. The WLAN access point 200 provides WLAN access for a plurality of WLAN-capable mobile communication devices, such as mobile communication device 100, by utilizing WLAN interface 210 having a respective transceiver. The WLAN access point 200 is adapted to provide broadband Internet access using for instance a fiber optic or a DSL connection, which is connected to WAN port 260. In the shown embodiment, the WLAN access point 200 is further provided with several LAN ports 270 for connecting to local devices via Ethernet. The WLAN access point 200 further comprises a microprocessor 250, a data memory 230, and a program memory 240, wherein in the program memory 240 executable instructions are stored, which are adapted, when executed by the microprocessor 250, to determine network attributes associated with the WLAN device 200, to generate network attribute information depending on the determined network attributes, and to transmit said network attribute information to the mobile communication device 100 via WLAN.

In the data memory 230 with advantage static network attributes are stored. Furthermore, the WLAN access point 200 is preferably adapted to determine current values of dynamically changing network attributes associated with the WLAN access point 200.

The WLAN access point 200 is adapted to regularly broadcast an SSID, wherein the SSID comprises information on network attributes, in particular the static network attributes stored in data memory 230. Furthermore, in a preferred embodiment, the WLAN access point 200 may comprise a webserver, which may be part of a program stored in the program memory 240. The web server may for example be integrated in a firmware of the WLAN access point 200. The WLAN access point 200 is adapted to provide and/or generate a machine-readable web page, which comprises information on determined network attributes. This web page may be accessed by the mobile communication device 100 via the web server. The web page may be provided as a so-called captive portal, which typically is a web page that is automatically displayed to newly connected users of a WLAN before they are granted broader access to network resources, and which according to the invention is automatically interpreted by mobile communication device 100.

In Fig. 3 a schematic view of an exemplary embodiment of a mobile communication device 100 is shown, which may be provided as a smartphone, a notebook, a notepad, or the like. In the shown embodiment the communication device 100 is adapted to communicate via a cellular network using a mobile radio interface 120, and it is adapted to communicate via WLAN using a WLAN interface 110. In the shown embodiment the mobile communication device 100 comprises a microprocessor 150, a data memory 130 and a program memory 140. In the program memory 140 executable instructions are stored, which are adapted, when executed by the microprocessor 150, to automatically receive network attribute information from at least one of the WLAN access points 200-1, 200-2 and/or 200-3, wherein said network attribute information is generated by the respective WLAN access point depending on network attributes, which are determined by the respective WLAN access point, to process the received network attribute information and to select one of the WLAN access points or a mobile radio network for accessing a destination network, in particular the Internet, depending on the result of processing the received network attribute information.

For this purpose, the mobile communication device 100 is adapted to automatically extract information from a received service set identifier and/or from a received web page. An SSID may for instance be interpreted using a pre-defined delimiter symbol for separating a pre-defined number of character sequences, each of which may then be interpreted in a pre-defined manner, for example as a text or as a number. For extracting information from a web page, the web page in particular is generated to be machine-readable, wherein the mobile communication device 100 is adapted to read the web page. The web page for this purpose may for example have XML format.

It is to be noted that the described method may of course also be employed with a mobile communication device, which comprises a WLAN interface 110, but which is not adapted to communicate via a cellular network and accordingly is not provided with a mobile radio interface 120. This is for instance the case for most notebooks. In case a cellular network cannot be accessed, due to a lack of a respective interface or due to a lack of reception in the mobile radio network, one of at least two available WLAN access points may be selected for accessing a destination network depending on respectively received network attribute information.

It is further to be noted that the above-described method preferably is performed automatically, so that the mobile communication device 100 automatically selects the best available access path according to a pre-defined selection parameter, and either accesses a WLAN access point of possibly several WLAN access points or accesses a cellular network. Alternatively, the relevant network attribute information may also be displayed to a user of the mobile communication device 100, and the user then makes the selection.

At least some of the preferred aspects of the invention are again summarized below.

According to one aspect, a method for providing information relating to network attributes associated with a WLAN access point 200 to a mobile communication device 100 is provided, which comprises the steps of:
a) determining, by a WLAN access point 200, network attributes associated with the WLAN access point 200, wherein said WLAN access point 200 is located at a hotspot 400,
b) generating, by the WLAN access point 200, network attribute information depending on the determined network attributes and
c) transmitting, by the WLAN access point 200, said network attribute information to at least one mobile communication device 100 via a WLAN communication.

Preferably, steps a), b) and/or c) are repeated at pre-determined times, in particular cyclically in pre-defined time intervals.

Step a) advantageously comprises retrieving, by the WLAN access point 200, static network attributes, which are stored in a memory 230 of the WLAN access point 200, and/or determining, by the WLAN access point 200, current values of dynamically changing network attributes associated with the WLAN access point 200.

Step b) advantageously comprises generating a service set identifier, which comprises information on the determined network attributes, wherein step c) comprises broadcasting said service set identifier by the WLAN access point 200. Step b) comprises generating a machine-readable web page, which comprises information on the determined network attributes, wherein step c) comprises transmitting said web page from a webserver, which is integrated in the WLAN access point 200, to the mobile communication device 100, and wherein the mobile communication
device 100 automatically interprets the received web page to extract network attribute information.

In a preferred embodiment, a URL of the web page is provided to the mobile communication device 100 and the mobile communication device 100 accesses the web page via the web server using the URL, at pre-determined times, in particular cyclically in pre-defined time intervals.

In the case that at a hotspot 400 more than one WLAN access point 200 is present, wherein the WLAN access points in particular are operated by different providers, the mobile communication device 100 with advantage receives at least two pieces of network attribute information, respectively associated with different WLAN access points, wherein said different WLAN access points are located at the same hotspot.

Depending on received network attribute information associated with at least one WLAN access point 200 located at a given hotspot 400, the mobile communication device 100 automatically selects one of said at least one WLAN access points or a mobile radio network for accessing a destination network, in particular the Internet.

The network attributes, which are determined in step a), preferably comprise a maximum bit rate downstream and/or upstream, a currently available bit rate downstream and/or upstream, an average uptime, a volume limit, a login type, an information on whether VPN is allowed, a maximum number of currently allowable additional users, and/or an information on blocked ports.

According to another aspect of the invention a WLAN device 200 is provided, which is adapted to operate as a WLAN access point, and which provides WLAN access for a plurality of WLAN-capable mobile communication devices, wherein the WLAN device comprises a processor 250, a memory, a first interface 260 for connecting to a communication network, in particular to the Internet, a second interface 210 for providing WLAN access, said second interface comprising a transceiver, wherein in said memory 240 executable instructions are stored, which are adapted, when executed by said processor, to perform the steps of:
a) determining network attributes associated with the WLAN device 200,
b) generating network attribute information depending on the determined network attributes, and
c) transmitting said network attribute information to at least one mobile communication device 100 via the second interface.

In a preferred embodiment static network attributes are stored in the memory and/or the WLAN device 200 is adapted to determine current values of dynamically changing network attributes associated with the WLAN device 200.

Furthermore, the WLAN device 200 preferably is adapted to generate and broadcast a service set identifier, which comprises information on the determined network attributes.

The WLAN device 200 comprises a webserver and is adapted to generate a machine-readable web page, which comprises information on the determined network attributes, and to transmit said web page from said webserver to the at least one mobile communication device 100.

According to another aspect of the invention a mobile communication device 100 is provided, which comprises a processor 150, a memory, and an interface 110 for connecting to a WLAN, wherein in said memory executable instructions are stored, which are adapted, when executed by said processor 150, to automatically perform the steps of:
- receiving network attribute information from at least one WLAN access point 200, wherein said network attribute information is generated by the respective WLAN access point 200 depending on network attributes, which are determined by the respective WLAN access point 200, and selecting one of said at least one WLAN access points 200 for accessing a destination network, in particular the Internet, depending on the received network attribute information.

The mobile communication device 100 is adapted to automatically extract information on network attributes associated with at least one WLAN access point 200 from a received web page, and preferably is adapted to automatically extract information on network attributes associated with at least one WLAN access point 200 from a received service set identifier.

In a preferred embodiment, the mobile communication device 100 further comprises an interface 120 for connecting to a mobile radio network, in particular to a cellular communication network, and the executable instructions stored in the memory are further adapted to select one of the at least one WLAN access points 200 or the mobile radio network for accessing the destination network depending on the received network attribute information, wherein the mobile radio network is selected, if it provides better service quality than each of the WLAN access points 200. For this purpose, the mobile communication device with advantage is adapted to determine service quality parameters of a communication connection established via the mobile radio network, in particular such service quality parameters, which allow a comparison with network attribute information received from at least one WLAN access point, in particular with information on network attributes associated with at least one WLAN access point 200 extracted from a received SSID and/or from a received web page.

## Claims

1. A method for providing information relating to network attributes associated with a WLAN access point (200) to a mobile communication device (100), comprising the steps of:
a) determining, by a WLAN access point (200), network attributes associated with the WLAN access point (200), wherein said WLAN access point (200) is located at a hotspot (400),
b) generating, by the WLAN access point (200), depending on the determined network attributes, a machine-readable web page, which comprises information on the determined network attributes, and
c) transmitting, by the WLAN access point (200), said web page from a webserver, which is integrated in the WLAN access point (200), to at least one mobile communication device (100) via a WLAN communication, wherein the mobile communication device (100) automatically interprets the received web page to extract network attribute information.

2. The method according to claim 1, wherein steps a), b) and/or c) are repeated at pre-determined times.

3. The method according to claim 1 or 2, wherein step a) comprises retrieving, by the WLAN access point (200), static network attributes, which are stored in a memory (230, 240) of the WLAN access point (200).

4. The method according to any one of the preceding claims, wherein step a) comprises determining, by the WLAN access point (200), current values of dynamically changing network attributes associated with the WLAN access point (200).

5. The method according to any one of the preceding claims, wherein step b) comprises generating a service set identifier, which comprises information on the determined network attributes, and wherein step c) comprises broadcasting said service set identifier by the WLAN access point (200).

6. The method according to any one of the preceding claims, wherein a URL of the web page is provided to the mobile communication device (100) and the mobile communication device (100) accesses the web page via the web server using the URL, at pre-determined times.

7. The method according to any one of the preceding claims, wherein the mobile communication device (100) receives at least two machine-readable web pages and automatically interprets the received at least two machine-readable web pages to extract at least two pieces of network attribute information, wherein the at least two machine-readable web pages are respectively associated with different WLAN access points (200), wherein said different WLAN access points (200) are located at the same hotspot (400).

8. The method according to any one of the preceding claims, wherein the mobile communication device (100), depending on network attribute information extracted by automatically interpreting a received machine-readable web page associated with at least one WLAN access point (200) located at a given hotspot (400), automatically selects one of said at least one WLAN access points (200) or a mobile radio network for accessing a destination network, in particular the Internet.

9. The method according to any one of the preceding claims, wherein the network attributes, which are determined in step a), comprise
- a maximum bit rate downstream and/or upstream,
- a currently available bit rate downstream and/or upstream,
- an average uptime,
- a volume limit,
- a login type,
- an information on whether VPN is allowed,
- a maximum number of currently allowable additional users, and/or
- an information on blocked ports.

10. A WLAN device (200), adapted to operate as a WLAN access point, which provides WLAN access for a plurality of WLAN-capable mobile communication devices, comprising
- a processor (250),
- a memory (230, 240),
- a first interface (260) for connecting to a communication network, in particular to the Internet,
- a second interface (210) for providing WLAN access, said second interface comprising a transceiver,
wherein
the WLAN device (200) comprises a webserver and is adapted to perform the steps performed by the WLAN access point of any one of claims 1 to 9.

11. The WLAN device (200) according to claim 10, wherein static network attributes are stored in the memory (230) and/or the WLAN device (200) is adapted to determine current values of dynamically changing network attributes associated with the WLAN device (200).

12. The WLAN device (200) according to any one of claims 10 or 11, wherein the WLAN device (200) is adapted to generate and broadcast a service set identifier, which comprises information on the determined network attributes.

13. A mobile communication device (100), comprising
- a processor (150),
- a memory (130, 140), and
- an interface (110) for connecting to a WLAN,
wherein
the mobile communication device (100) is adapted to automatically perform the steps performed by the mobile communication device of any one of claims 1 to 9.

14. The mobile communication device (100) according to claim 13, adapted to automatically extract information on network attributes associated with at least one WLAN access point (200) from a received service set identifier.

## Patentansprüche

1. Verfahren zum Bereitstellen von Informationen bezüglich Netzwerkattributen, die einem WLAN-Zugangspunkt (200) zugeordnet sind, einem mobilen Kommunikationsgerät (100), umfassend die folgenden Schritte:
a) Ermitteln, durch einen WLAN-Zugangspunkt (200), von dem WLAN-Zugangspunkt (200) zugeordneten Netzwerkattributen, wobei sich der WLAN-Zugangspunkt (200) an einem Hotspot (400) befindet,
b) Erzeugen einer maschinenlesbaren Webseite, die Informationen über die ermittelten Netzwerkattribute umfasst, durch den WLAN-Zugangspunkt (200) in Abhängigkeit der ermittelten Netzwerkattribute, und
c) Übertragen der Webseite durch den WLAN-Zugangspunkt (200) von einem in dem WLAN-Zugangspunkt (200) integrierten Webserver über eine WLAN-Kommunikation zu wenigstens einem mobilen Kommunikationsgerät (100), wobei das mobile Kommunikationsgerät (100) die empfangene Webseite automatisch interpretiert, um Netzattributinformationen zu extrahieren.

2. Verfahren nach Anspruch 1, wobei die Schritte a), b) und/oder c) zu vorbestimmten Zeiten wiederholt werden.

3. Verfahren nach Anspruch 1 oder 2, wobei Schritt a) das Abrufen von statischen Netzwerkattributen durch den WLAN-Zugangspunkt (200) umfasst, die in einem Speicher (230, 240) des WLAN-Zugangspunkts (200) gespeichert sind.

4. Verfahren nach einem der vorstehenden Ansprüche, wobei Schritt a) ein Ermitteln aktueller Werte von sich dynamisch ändernden Netzwerkattributen, die dem WLAN-Zugangspunkt (200) zugeordnet sind, durch den WLAN-Zugangspunkt (200) umfasst.

5. Verfahren nach einem der vorstehenden Ansprüche, wobei Schritt b) ein Erzeugen einer Funk-Netzwerk-Kennung umfasst, die Informationen über die ermittelten Netzwerkattribute umfasst, und wobei Schritt c) das Rundsenden der Funk-Netzwerk-Kennung durch den WLAN-Zugangspunkt (200) umfasst.

6. Verfahren nach einem der vorstehenden Ansprüche, wobei dem mobilen Kommunikationsgerät (100) eine URL der Webseite bereitgestellt wird und das mobile Kommunikationsgerät (100) zu vorbestimmten Zeiten über den Webserver unter Verwendung der URL auf die Webseite zugreift.

7. Verfahren nach einem der vorstehenden Ansprüche, wobei das mobile Kommunikationsgerät (100) wenigstens zwei maschinenlesbare Webseiten empfängt und die wenigstens zwei empfangenen maschinenlesbaren Webseiten automatisch interpretiert, um wenigstens zwei Netzwerkattribut-Informationen zu extrahieren, wobei die wenigstens zwei maschinenlesbaren Webseiten jeweils verschiedenen WLAN-Zugangspunkten (200) zugeordnet sind, wobei sich die verschiedenen WLAN-Zugangspunkte (200) an demselben Hotspot (400) befinden.

8. Verfahren nach einem der vorstehenden Ansprüche, wobei das mobile Kommunikationsgerät (100) in Abhängigkeit von Netzattribut-Informationen, die durch automatisches Interpretieren einer empfangenen maschinenlesbaren Webseite extrahiert wurden, die wenigstens einem WLAN-Zugangspunkt (200) zugeordnet sind, der sich an einem bestimmten Hotspot (400) befindet, automatisch einen der wenigstens einen WLAN-Zugangspunkte (200) oder ein Mobilfunknetz für den Zugriff auf ein Zielnetz, insbesondere das Internet, auswählt.

9. Verfahren nach einem der vorstehenden Ansprüche, wobei die in Schritt a) ermittelten Netzwerkattribute
- eine maximale Bitrate im Downstream und/oder im Upstream,
- eine aktuell verfügbare Bitrate im Downstream und/oder im Upstream,
- eine durchschnittliche Betriebszeit,
- ein Volumenlimit,
- einen Login-Typ,
- eine Information darüber, ob VPN erlaubt ist,
- eine maximale Anzahl von aktuell erlaubten zusätzlichen Nutzern, und/oder
- eine Information über gesperrte Ports
umfassen.

10. WLAN-Vorrichtung (200), ausgebildet zum Betrieb als WLAN-Zugangspunkt, der einen WLAN-Zugang für eine Vielzahl von WLAN-fähigen mobile Kommunikationsgeräte bereitstellt, mit
- einem Prozessor (250),
- einem Speicher (230, 240),
- einer ersten Schnittstelle (260) für die Verbindung mit einem Kommunikationsnetz, insbesondere mit dem Internet,
- einer zweiten Schnittstelle (210) für die Bereitstellung eines WLAN-Zugangs, wobei die zweite Schnittstelle einen Transceiver umfasst,
wobei
die WLAN-Vorrichtung (200) einen Webserver umfasst und dazu ausgebildet ist, die von dem WLAN-Zugangspunkt nach einem der Ansprüche 1 bis 9 durchgeführten Schritte durchzuführen.

11. WLAN-Vorrichtung (200) nach Anspruch 10, wobei statische Netzwerkattribute in dem Speicher (230) gespeichert sind und/oder die WLAN-Vorrichtung (200) dazu ausgebildet ist, aktuelle Werte sich dynamisch ändernder Netzwerkattribute, die der WLAN-Vorrichtung (200) zugeordnet sind, zu ermitteln.

12. WLAN-Vorrichtung (200) nach einem der Ansprüche 10 oder 11, wobei die WLAN-Vorrichtung (200) dazu ausgebildet ist, eine Funk-Netzwerk-Kennung, die Informationen über die ermittelten Netzwerkattribute umfasst, zu erzeugen und zu senden.

13. Mobiles Kommunikationsgerät (100), umfassend
- einen Prozessor (150),
- einen Speicher (130, 140), und
- eine Schnittstelle (110) zur Verbindung mit einem WLAN,
wobei
das mobile Kommunikationsgerät (100) dazu ausgebildet ist, die von dem mobilen Kommunikationsgerät nach einem der Ansprüche 1 bis 9 durchgeführten Schritte automatisch durchzuführen.

14. Mobiles Kommunikationsgerät (100) nach Anspruch 13, dazu ausgebildet, automatisch Informationen über Netzwerkattribute, die wenigstens einem WLAN-Zugangspunkt (200) zugeordnet sind, aus einer empfangenen Funk-Netzwerk-Kennung zu extrahieren.

## Revendications

1. Procédé pour fournir des informations liées à des attributs de réseau associés à un point d'accès WLAN (200) à un dispositif de communications mobiles (100) comprenant les étapes suivantes :
a) la détermination, par un point d'accès WLAN (200), d'attributs de réseau associés au point d'accès WLAN (200), dans lequel ledit point d'accès WLAN (200) est situé au niveau d'un hotspot (400),
b) la génération, par le point d'accès WLAN (200), en fonction des attributs de réseau déterminés, d'une page Web lisible par machine, qui comprend des informations sur les attributs de réseau déterminés, et
c) la transmission, par le point d'accès WLAN (200), de ladite page Web à partir d'un serveur Web, qui est intégré dans le point d'accès WLAN (200), à au moins un dispositif de communications mobiles (100) via une communication WLAN, dans lequel le dispositif de communications mobiles (100) interprète automatiquement la page Web reçue pour extraire des informations d'attribut de réseau.

2. Procédé selon la revendication 1, dans lequel les étapes a), b) et/ou c) sont répétées à des moments prédéterminés.

3. Procédé selon la revendication 1 ou 2, dans lequel l'étape a) comprend la récupération, par le point d'accès WLAN (200), d'attributs de réseau statique, qui sont stockés dans une mémoire (230, 240) du point d'accès WLAN (200).

4. Procédé selon l'une quelconque des revendications précédentes, dans lequel l'étape a) comprend la détermination, par le point d'accès WLAN (200), de valeurs courantes d'attributs de réseau changeant dynamiquement associés au point d'accès WLAN (200).

5. Procédé selon l'une quelconque des revendications précédentes, dans lequel l'étape b) comprend la génération d'un identifiant d'ensemble de services, qui comprend des informations sur les attributs de réseau déterminés, et dans lequel l'étape c) comprend la diffusion dudit identifiant d'ensemble de services par le point d'accès WLAN (200).

6. Procédé selon l'une quelconque des revendications précédentes, dans lequel une URL de la page Web est fournie au dispositif de communications mobiles (100) et le dispositif de communications mobiles (100) accède à la page Web via le serveur Web en utilisant l'URL, à des moments prédéterminés.

7. Procédé selon l'une quelconque des revendications précédentes, dans lequel le dispositif de communications mobiles (100) reçoit au moins deux pages Web lisibles par machine et interprète automatiquement les au moins deux pages Web lisibles par machine reçues pour extraire au moins deux informations d'attribut de réseau, dans lequel les au moins deux pages Web lisibles par machine sont respectivement associées à différents points d'accès WLAN (200), dans lequel lesdits différents points d'accès WLAN (200) sont situés au niveau du même hotspot (400).

8. Procédé selon l'une quelconque des revendications précédentes, dans lequel le dispositif de communications mobiles (100), en fonction d'informations d'attribut de réseau extraites en interprétant automatiquement une page Web lisible par machine reçue associée à au moins un point d'accès WLAN (200) situé au niveau d'un hotspot (400) donné, sélectionne automatiquement l'un desdits au moins un point d'accès WLAN (200) ou un réseau radio pour les mobiles pour accéder à un réseau de destination, en particulier Internet.

9. Procédé selon l'une quelconque des revendications précédentes, dans lequel les attributs de réseau, qui sont déterminés à l'étape a), comprennent
- un débit binaire maximal en aval et/ou en amont,
- un débit binaire en aval et/ou en amont couramment disponible,
- un temps utilisable moyen,
- une limite de volume,
- un type d'ouverture de session,
- une information sur si un VPN est autorisé,
- un nombre maximal d'utilisateurs supplémentaires couramment admissibles, et/ou
- une information sur des ports bloqués.

10. Dispositif WLAN (200), adapté pour fonctionner comme un point d'accès WLAN, qui fournit un accès WLAN pour une pluralité de dispositifs de communications mobiles compatibles WLAN, comprenant
- un processeur (250),
- une mémoire (230, 240),
- une première interface (260) pour une connexion à un réseau de communication, en particulier à Internet,
- une seconde interface (210) pour fournir un accès WLAN, ladite seconde interface comprenant un émetteur-récepteur,
dans lequel
le dispositif WLAN (200) comprend un serveur Web et est adapté pour réaliser les étapes réalisées par le point d'accès WLAN selon l'une quelconque des revendications 1 à 9.

11. Dispositif WLAN (200) selon la revendication 10, dans lequel des attributs de réseau statique sont stockés dans la mémoire (230) et/ou le dispositif WLAN (200) est adapté pour déterminer des valeurs courantes d'attributs de réseau changeant dynamiquement associés au dispositif WLAN (200).

12. Dispositif WLAN (200) selon l'une quelconque des revendications 10 ou 11, dans lequel le dispositif WLAN (200) est adapté pour générer et diffuser un identifiant d'ensemble de services, qui comprend des informations sur les attributs de réseau déterminés.

13. Dispositif de communications mobiles (100), comprenant
- un processeur (150),
- une mémoire (130, 140), et
- une interface (110) pour une connexion à un WLAN,
dans lequel
le dispositif de communications mobiles (100) est adapté pour réaliser automatiquement les étapes réalisées par le dispositif de communications mobiles selon l'une quelconque des revendications 1 à 9.

14. Dispositif de communications mobiles (100) selon la revendication 13, adapté pour extraire automatiquement des informations sur des attributs de réseau associés à au moins un point d'accès WLAN (200) à partir d'un identifiant d'ensemble de services reçu.
